# EUROPÄISCHE PATENTSCHRIFT

(11) **EP 3 656 021 B1**
(45) Veröffentlichungstag und Bekanntmachung des Hinweises auf die Patenterteilung: **26.04.2023**
(21) Anmeldenummer: 18742774.5
(22) Anmeldetag: 17.07.2018
(51) Int. Cl.: H01R 12/72, H01R 13/6471, H01R 13/6594, B60R 16/023, H01R 13/66, H01R 12/58

(54) **STEUERGERÄT MIT ABSCHIRMUNG**
CONTROL DEVICE WITH SHIELDING
DISPOSITIF DE COMMANDE AVEC PROTECTION

(30) Priorität: 21.07.2017 DE 102017212601
(43) Veröffentlichungstag der Anmeldung: 27.05.2020
(73) Patentinhaber: Robert Bosch GmbH, 70442 Stuttgart (DE)
(72) Erfinder: GUECKEL, Richard, 71701 Schwieberdingen (DE); FRIESS, Gerald, 71723 Grossbottwar (DE); KROECKEL, Markus, 71701 Schwieberdingen (DE)
(86) Internationale Anmeldenummer: PCT/EP2018/069346
(87) Internationale Veröffentlichungsnummer: WO 2019/016183

(56) Entgegenhaltungen:
- DE-T5-112013 005 786
- DE-T5-112013 005 786
- US-A1- 2012 184 145
- US-A1- 2012 184 145
- US-A1- 2016 211 629
- US-A1- 2016 211 629

## Beschreibung

### Stand der Technik

Die Erfindung betrifft ein Steuergerät sowie eine elektrische Verbindungsanordnung unter Verwendung eines erfindungsgemäßen Steuergeräts.

Steuergeräte, beispielsweise für Kfz-Anwendungen, sind in vielfältigen konstruktiven Ausführungen bekannt. Ein derartiges Steuergerät umfasst üblicherweise wenigstens einen in einem Gehäuse des Steuergeräts angeordneten, eine elektronische Schaltung aufweisenden Schaltungsträger, zum Beispiel in Form einer Leiterplatte, der über einen mit dem Schaltungsträger verbundenen Steckeranschlusskörper mit einem Stecker eines Kabelbaums des Kraftfahrzeugs verbindbar ist. Der Steckeranschlusskörper bildet dabei zusammen mit dem Stecker des Kabelbaums eine elektrische Verbindungsanordnung aus. In dem Steckeranschlusskörper sind weiterhin typischerweise mehrere parallel zueinander angeordnete Reihen von Kontaktelementen angeordnet, die von dem als Kunststoffspritzgußteil ausgebildeten Steckeranschlusskörper teilweise umspritzt sind, und wobei die Kontaktelemente in jeder Reihe wiederum zueinander beabstandet sind. Eine derartige Anordnung von Kontaktelementen im Steckanschlusskörper wird auch als Messerleiste bezeichnet und ist insofern standardisiert, als dass die Dimensionen bzw. Querschnitte der Kontaktelemente sowie die Abstände zwischen den einzelnen Reihen der Kontaktelemente fest definiert sind, um standardisierte Schnittstellen zwischen dem Steuergerät und dem entsprechenden Stecker ausbilden zu können. Die Kontaktelemente sind üblicherweise als Stanzgitterelemente ausgebildet, mit einem parallel zum Schaltungsträger angeordneten, mit Gegenkontakten des Steckers verbindbaren Abschnitt und einem üblicherweise senkrecht zu diesem Abschnitt angeordneten weiteren Abschnitt, der beispielsweise als Einpresspin ausgebildet ist und in den Schaltungsträger bzw. einen entsprechenden Anschlussbereich für den Schaltungsträger einpressbar ist. Derartige Kontaktelemente dienen üblicherweise der Übertragung von analogen (Spannungs-)Signalen oder aber als Massepins.

Zukünftige Anwendungen von derartigen Steuergeräten benötigen mehr und mehr die Möglichkeit, eine Signalübertragung mit großen Datenübertragungsraten zu ermöglichen. Gemeint sind hierbei typischerweise Datenübertragungsraten von bis zu 1Mbit pro Sekunde. Hierfür dienen beispielsweise Ethernet-Leitungen, die diesbezüglich eine genügend hohe Datenübertragungsrate ermöglichen. Wesentlich dabei ist, dass derartige Leitungen bzw. Ethernet-Leitungen gegenüber dem Einfluss von elektromagnetischen Strahlungen geschützt bzw. abgeschirmt angeordnet sind. Hierbei besteht die Problematik, beispielsweise Ethernet-Leitungen im Bereich des Steuergeräts bzw. des Steckeranschlusskörpers derart anzuordnen bzw. auszubilden, dass einerseits die gewünschte Abschirmwirkung erreicht wird, und dass andererseits eine möglichst hohe Flexibilität hinsichtlich des Steuergeräts sowie von Steuergerätvarianten und die Verwendung standardisierter Bauteile und Geometrien ermöglicht wird.

Die Offenlegungsschrift DE112013005786 T5 zeigt einen Stecker eines elektronischen Steuergerätes, bei welchem mehrere in Reihen nebengeordnete Signalführenden Leitungspins mit einem jeweiligen Endabschnitt mit einem Schaltungsträger verbunden sind. Der gegenüberliegende Endabschnitt der Leitungspins bilden einen Steckeranschluss für einen Gegenstecker aus.

Die Offenlegungsschriften US2016/211629 A1 und US 2012/184145 A1 zeigen jeweils Ausführungen eines Steckerelements mit umfassten Signalführenden Leitungspins. Nebengeordnet in einer anderen Pinreihe sind auch Leitungspins angeordnet, welche mit Masse verbunden sind.

### Offenbarung der Erfindung

Das erfindungsgemäße Steuergerät mit den Merkmalen des Anspruchs 1 hat den Vorteil, dass es auf konstruktiv relativ einfache Art und Weise unter Verwendung an sich bekannter bzw. konstruktiv relativ einfach ausgebildeter Bauelemente eine Abschirmung von der Signalübertagung dienenden (ersten) Kontaktelementen ermöglicht. Hierzu ist es erfindungsgemäß im Wesentlichen vorgesehen, dass neben den der Signalübertragung dienenden ersten Kontaktelementen zweite Kontaktelemente vorgesehen sind, die innerhalb des Steckeranschlusskörpers die ersten Kontaktelemente umgeben bzw. in Überdeckung mit diesen angeordnet sind, wobei die zweiten Kontaktelemente weiterhin mit elektrischem Massepotential des Steuergeräts verbunden sind. Durch die Überdeckung bzw. Abdeckung der ersten Kontaktelemente durch die eine Abschirmung bildenden zweiten Kontaktelemente wird eine Abschirmung der ersten Kontaktelemente gegenüber elektromagnetischer Strahlung ermöglicht. Eine derartige Überdeckung bzw. Abschirmung der ersten Kontaktelemente durch die zweiten Kontaktelemente findet insbesondere dadurch statt, dass parallel und in geringem Abstand zur Erstreckungsrichtung der ersten Kontaktelemente die zweiten Kontaktelemente angeordnet sind und dabei eine Ausdehnung bzw. Größe aufweisen, die zumindest den den zweiten Kontaktelementen zugewandten Flächen der ersten Kontaktelemente entspricht. Es wird somit mit anderen Worten gesagt eine Abschirmung unter Verwendung von zweiten Kontaktelementen ermöglicht, wobei die zweiten Kontaktelemente in Art der ersten Kontaktelemente ausgebildet sind, und wobei die zweiten Kontaktelemente mit elektrischem Massepotential verbunden sind. Eine derartige erfindungsgemäße Ausbildung des Steuergeräts ermöglicht es insbesondere, neben der Verwendung von zumindest näherungsweise gleichen bzw. ähnlich ausgebildeten ersten und zweiten Kontaktelementen auch Schnittstellen zum Steuergerät bzw. zum Schaltungsträger auszubilden zu können, die die Verwendung von standardisierten Schnittstellen ermöglicht. Ferner ist für eine seitliche Abschirmung vorgesehen, dass zweite Kontaktelemente, die in der gleichen Reihe wie das wenigstens eine erste Kontaktelement beidseitig des wenigstens einen ersten Kontaktelements angeordnet sind, identisch zum wenigstens einen ersten Kontaktelement ausgebildet sind. Gemeint ist hierbei, dass diese zweiten Kontaktelemente, ggf. mit Ausnahme der dem Schaltungsträger abgewandten Endbereiche, identisch ausgebildet sind wie das wenigstens eine erste Kontaktelement.

Vorteilhafte Weiterbildungen des erfindungsgemäßen Steuergeräts sind in den Unteransprüchen aufgeführt.

Zur Optimierung der Abschirmwirkung der der Signalübertragung dienenden ersten Kontaktelemente bzw. zur Erzielung möglichst geringer, eine Einkopplung elektromagnetischer Strahlung begünstigender Freiräume zwischen zweiten Kontaktelementen ist es vorgesehen, dass die der Ausbildung der Abschirmung des wenigstens einen ersten Kontaktelements dienenden zweiten Kontaktelemente unmittelbar neben dem wenigstens einen ersten Kontaktelement angeordnet sind. Unter einer unmittelbaren Anordnung wird dabei verstanden, dass zwischen den dem wenigstens einen ersten Kontaktelement zugeordneten, die Abschirmung ausbildenden zweiten Kontaktelementen keine weiteren Kontaktelemente angeordnet sind, wobei der Abstand zwischen den ersten und den zweiten Kontaktelementen üblicherweise den angesprochenen standardisierten Abständen im Bereich des Steckeranschlusskörpers bzw. des Schaltungsträgers entspricht.

Wie bereits oben erläutert, ist es von besonderem Vorteil, wenn die ersten und die zweiten Kontaktelemente zumindest im Bereich des Steckeranschlusskörpers, vorzugsweise auch im Verbindungsbereich mit dem Schaltungsträger, in standardisierten Abständen zueinander angeordnet sind. Eine derartige Ausbildung des Steuergeräts ermöglicht es insbesondere, dieses unterschiedlichsten Anforderungen insbesondere einer unterschiedlichen Anordnung und Anzahl von ersten, abzuschirmenden Kontaktelementen in besonders einfacher Art und Weise anzupassen, indem Anpassungen lediglich durch unterschiedlich ausgebildete Steckeranschlusskörper erfolgen, wobei diese jedoch aufgrund der standardisierten Dimensionen zumindest steckerseitig standardisierte Schnittstellen ausbilden.

Zur Optimierung der Abschirmwirkung ist es weiterhin vorgesehen, dass das der Signalübertragung dienende wenigstens eine erste Kontaktelement in verschiedenen Ebenen bzw. Richtungen abzuschirmen. Mit anderen Worten gesagt bedeutet dies, dass in Bezug auf den Querschnitt des ersten Kontaktelements nicht nur oberhalb oder unterhalb des ersten Kontaktelements Abschirmelemente vorhanden sind, sondern auch seitlich zum ersten Kontaktelement.

Eine weitere Optimierung der Abschirmwirkung hinsichtlich der zweiten Kontaktelemente, die sich in einer anderen Reihe befinden wie das wenigstens eine abzuschirmende erste Kontaktelement sieht vor, dass die in einer anderen Reihe als das wenigstens eine erste Kontaktelement angeordneten zweiten Kontaktelemente jeweils ein Schirmblech ausbilden, dessen Breite im Überdeckungsbereich mit dem ersten Kontaktelement zumindest bereichsweise größer ist als die Breite des ersten Kontaktelements.

Eine besonders einfache Ausgestaltung von seitlichen Abschirmelementen sieht vor, dass zweite Kontaktelemente, die in der gleichen Reihe wie das wenigstens eine erste Kontaktelement beidseitig des wenigstens einen ersten Kontaktelements angeordnet sind, identisch zum wenigstens einen ersten Kontaktelement ausgebildet sind. Gemeint ist hierbei, dass diese zweiten Kontaktelemente, ggf. mit Ausnahme der dem Schaltungsträger abgewandten Endbereiche, identisch ausgebildet sind wie das wenigstens eine erste Kontaktelement.

Eine weitere Optimierung der Abschirmwirkung hinsichtlich der zweiten Kontaktelemente, die sich in einer anderen Reihe befinden wie das wenigstens eine abzuschirmende erste Kontaktelement sieht vor, dass die in einer anderen Reihe als das wenigstens eine erste Kontaktelement angeordneten zweiten Kontaktelemente jeweils ein Schirmblech ausbilden, dessen Breite im Überdeckungsbereich mit dem ersten Kontaktelement zumindest bereichsweise größer ist als die Breite des ersten Kontaktelements. Insbesondere aus Handhabungsgründen, ggf. auch aus Gründen einer möglichst einfachen Herstellung eines derartigen Schirmblechs weist dieses beispielsweise wenigstens einen Schlitz oder eine Öffnung auf. Hierbei kann es insbesondere vorgesehen sein, dass der wenigstens eine Schlitz bzw. die Öffnung fluchtend zu einer Einpressschulter des ersten Kontaktelements zum Einpressen des ersten Kontaktelements in eine Öffnung des Schaltungsträgers oder eines anderen Elements angeordnet ist. Eine derartige Ausgestaltung des Schirmblechs ermöglicht es, das erste Kontaktelement durch ein entsprechendes Einpresswerkzeug, welches den Bereich der wenigstens einen Öffnung bzw. des Schlitzes durchgreift, in eine entsprechende Öffnung einzupressen.

Anstelle eines Schirmblechs kann es vorgesehen sein, dass die in einer anderen Reihe als das wenigstens eine erste Kontaktelement angeordneten zweiten Kontaktelement wie das wenigstens eine erste Kontaktelement ausgebildet sind. Dabei bezieht sich diese Ähnlichkeit der Ausbildung insbesondere auf die grundsätzliche Art und Ausgestaltung der zweiten Kontaktelemente in Form von Stanzgitterelementen, die als Einpresspins ausgebildet sind, während die dem Schaltungsträger abgewandten Endbereiche der zweiten Kontaktelemente beispielsweise die entsprechenden Endbereiche der ersten Kontaktelemente überragen, damit die Endbereiche der zweiten Kontaktelemente in Anlagekontakt mit steckerseitigen Abschirmelementen gebracht werden können.

Die erfindungsgemäße Ausgestaltung von abzuschirmenden ersten Kontaktelementen sieht vor, dass zwei unmittelbar nebeneinander angeordnete erste Kontaktelemente Bestandteil einer abgeschirmten Datenleitung, insbesondere einer Ethernet-Leitung sind, und dass ein Teil der der Abschirmung der beiden ersten Kontaktelemente dienenden zweiten Kontaktelemente dazu ausgebildet sind, ein steckerseitiges Abschirmgehäuse der Datenleitung zu kontaktieren.

Bevorzugt ist zur Ausbildung einer derartigen Kontaktierung mit einem steckerseitigen Abschirmgehäuse der Datenleitung vorgesehen, dass die zweiten Kontaktelemente auf der dem Schaltungsträger abgewandten Seite eine unterschiedliche Länge aufweisen, derart, dass die in der gleichen Reihe wie das wenigstens eine erste Kontaktelement angeordneten zweiten Kontaktelemente den anderen Reihen zugeordnete zweite Kontaktelemente überragen.

Eine nochmals verbesserte bzw. optimierte Abschirmwirkung bzgl. der seitlich des wenigstens einen ersten Kontaktelements liegenden Bereiche wird ermöglicht, wenn ein zweites Kontaktelement in einer seitlich zum wenigstens einem ersten Kontaktelement angeordneten Ebene eine geschlossene Abschirmfläche ausbildet. Gemeint ist hiermit, dass die Abschirmfläche das erste Kontaktelement nicht nur vollständig überdeckt, sondern auch über den seitlichen Bereich des ersten Kontaktelements hinausragt.

Eine weitere Optimierung der Abschirmwirkung sieht vor, dass das üblicherweise zwischen zwei Reihen von Kontaktelementen im Bereich des Steckeranschlusskörpers vorhandene Trennelement, dass in der Praxis auch als "Berührschutzrippe" bezeichnet wird, gleichzeitig der Abschirmung wenigstens eines ersten Kontaktelements dient. Hierzu wird konkret vorgeschlagen, dass der Steckeranschlusskörper auf der dem Schaltungsträger abgewandten Seite ein zwischen zwei Reihen von ersten und/oder zweiten Kontaktelementen angeordnetes Trennelement (Berührschutzrippe) aufweist, das mit einer Stirnfläche ein Ende des wenigstens einen ersten Kontaktelements überragt, dass das Trennelement zumindest bereichsweise aus Metall besteht, und dass das Metall mit elektrischem Massepotential verbunden ist. Eine derartige Ausbildung ermöglicht es insbesondere, das steckerseitige Abschirmelement einer Datenleitung beispielsweise mit einer Öffnung oder Ähnlichem auf der dem Trennelement zugewandten Seite versehen zu können, ohne dass dadurch die Einkopplung von elektromagnetischer Strahlung ermöglicht wird. Es wird somit hinsichtlich des steckerseitigen Abschirmelements für die (Daten-) Leitung eine größere konstruktive Gestaltungsmöglichkeit geschaffen.

Die Erfindung umfasst auch eine elektrische Verbindungsanordnung zwischen einem soweit beschriebenen erfindungsgemäßen Steuergerät und einem Stecker mit wenigstens einem Gegenkontakt zum Kontaktieren des ersten Kontaktelements im Steuergerät, wobei der Gegenkontakt zumindest bereichsweise von einem Abschirmgehäuse umgeben ist, und wobei das Abschirmgehäuse in Anlagekontakt mit wenigstens einem zweiten Kontaktelement des Steuergeräts angeordnet ist.

Da ein bevorzugter Anwendungsbereich des soweit beschriebenen Steuergeräts bei Kraftfahrzeuganwendungen liegt, ist es darüber hinaus vorgesehen, dass der Stecker Bestandteil eines Kabelbaumsteckers eines Kraftfahrzeugs ist.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: in perspektivischer Darstellung einen Teilbereich eines Steuergeräts mit einem mit dem Steuergerät verbundenen Stecker eines Kabelbaums,
- Fig. 2: im Bereich des Steuergeräts gemäß der Fig. 1 der Ausbildung von elektrischen Leitungen bzw. Verbindungen dienenden Bauteile in perspektivischer Darstellung,
- Fig. 3: einen Teil der Bauteile gemäß Fig. 2 zur Erläuterung von Abschirmmaßnahmen einer Datenleitung in perspektivischer Darstellung,
- Fig. 4: in perspektivischer Darstellung steuergeräteseitige und kabelbaumseitige Elemente zur Ausbildung einer Abschirmung,
- Fig. 5: die Bauteile gemäß Fig. 4 unter Verzicht auf ein in der Fig. 4 dargestelltes Abschirmgehäuse einer Ethernet-Leitung in perspektivischer Darstellung,
- Fig. 6: in Draufsicht einen Teilbereich einer Verbindungsanordnung zwischen Steuergerät und Ethernet-Leitungen,
- Fig. 7: in Draufsicht den Verbindungsbereich einer einzelnen Ethernet-Leitung mit steuergeräteseitigen Abschirmelementen,
- Fig. 8 und Fig. 9: in Seitenansicht bzw. in Draufsicht den Verbindungsbereich entsprechend der Fig. 7 zur Veranschaulichung verschiedener Abschirmbereiche,
- Fig. 10: eine Dargstellung einer abgewandelten Verbindung zwischen steuergeräteseitigen Abschirmelementen und einer Ethernet-Leitung unter Verwendung von speziell ausgebildeten seitlichen Abschirmblechen,
- Fig. 11: ein bei der Fig. 10 verwendetes Abschirmblech in einer Seitenansicht,
- Fig. 12: eine schematische Darstellung des Verbindungsbereichs zwischen dem Steuergerät und dem Stecker zur Erläuterung verschiedener Abschirmbereiche,
- Fig. 13: eine weitere Darstellung eines Verbindungsbereichs zwischen einem Steuergerät und einem Stecker unter Verwendung einer ein Abschirmelement ausbildenden Berührschutzrippe im Längsschnitt und
- Fig. 14: eine nochmals abgewandelte Ausgestaltung zwischen steuergeräteseitigen Abschirmelementen und einem Abschirmgehäuse einer Ethernet-Leitung in perspektivischer Darstellung.

Gleiche Elemente bzw. Elemente mit gleicher Funktion sind in den Figuren mit den gleichen Bezugsziffern versehen.

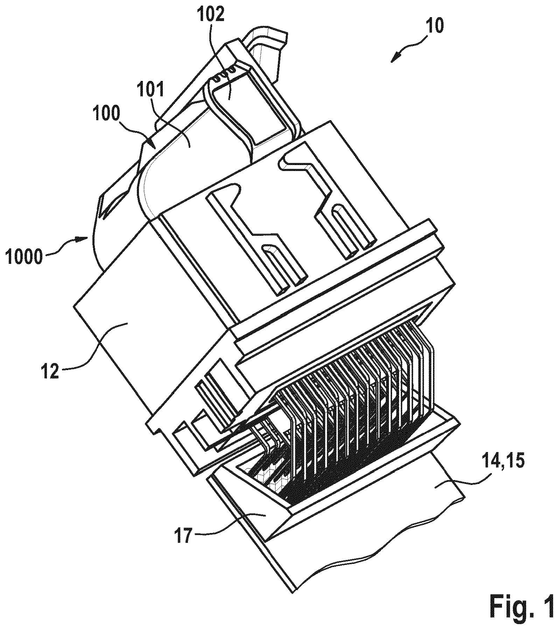

In der Fig. 1 ist ein Teilbereich eines Steuergeräts 10 dargestellt, wie es insbesondere, jedoch nicht einschränkend, als Steuergerät 10 in einem Kraftfahrzeug verwendet wird. Das Steuergerät 10 bildet zusammen mit einem in der Fig. 1 erkennbaren Stecker 100 eine Verbindungsanordnung 1000 aus, wobei der Stecker 100 ebenfalls bevorzugt und nicht einschränkend Bestandteil eines Kabelbaums des Kraftfahrzeugs ist.

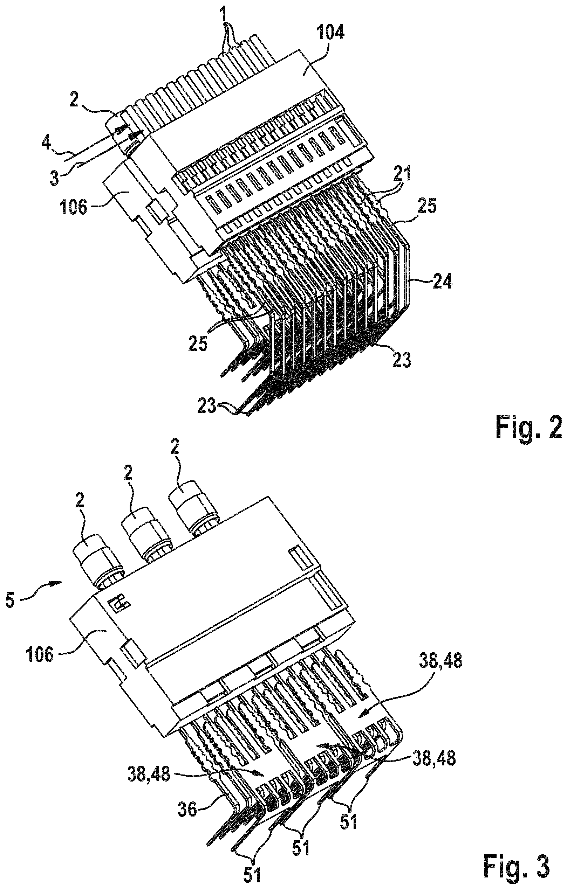

Der Stecker 100 weist ein Buchsengehäuse 101 mit einem an dem Buchsengehäuse 101 schwenkbar angeordneten Steckerhebel 102 auf, der dazu dient, den Stecker 100 mechanisch mit einem Steckeranschlusskörper 12 des Steuergeräts 10 zu verriegeln. In das Buchsengehäuse 101 sind zwei, in der Fig. 2 erkennbare Buchseneinsätze 104, 106 einsetzbar, wobei die Buchseneinsätze 104, 106 dazu ausgebildet sind, entweder analoge Leitungen 1 oder aber beispielsweise Ethernet-Leitungen 2 aufzunehmen. Hierzu sind in den Buchseneinsätzen 104, 106 entsprechende Aufnahmen zur Integration bzw. Befestigung von Elementen der Leitungen 1, 2 vorgesehen. Insbesondere ist anhand der Fig. 2 erkennbar, dass der (obere) Buchseneinsatz 104 zwei parallel zueinander angeordnete Reihen 3, 4 mit jeweils analogen Leitungen 1 aufweist, die seitlich in gleichgroßen Abständen zueinander angeordnet sind. Demgegenüber sind in dem (unteren) Buchseneinsatz 106, wie insbesondere anhand der Fig. 3 erkennbar ist, lediglich drei Ethernet-Leitungen 2 vorgesehen, die mit jeweils seitlichem Abstand zueinander in einer (einzigen) Reihe 5 angeordnet sind.

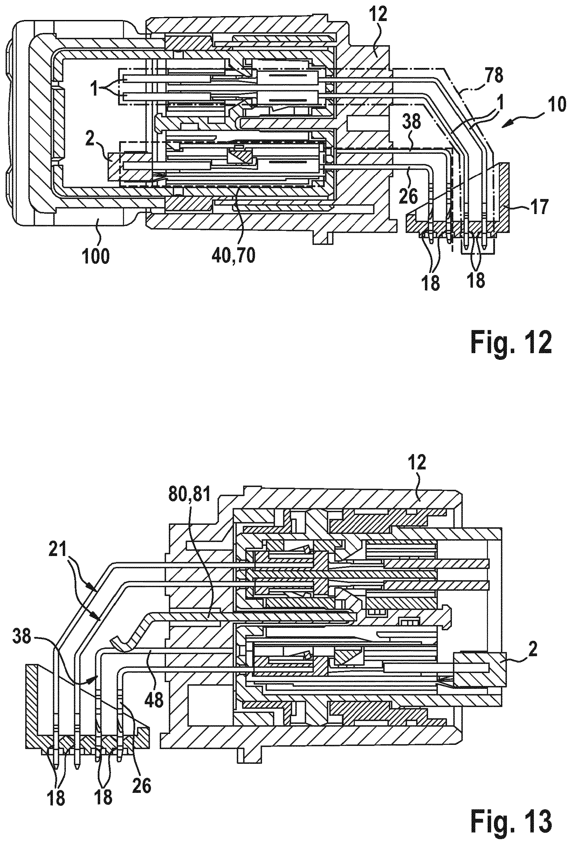

Der Steckeranschlusskörper 12 ist bereichsweise von einem nicht dargestellten, an sich bekanntem Gehäuse des Steuergeräts 10 umgeben, das in seinem Inneren einen Schaltungsträger 14, beispielsweise in Form einer Leiterplatte 15 aufweist. Der Schaltungsträger 14 bzw. die Leiterplatte 15 tragen eine ebenfalls nicht dargestellte elektronische Schaltung, die über den Steckeranschlusskörper 12 bzw. den Stecker 100 mit dem Kabelbaum des Kraftfahrzeugs verbunden ist. Die Verbindung zwischen dem Schaltungsträger 14 und dem Steckeranschlusskörper 12, der als Spritzgussteil ausgebildet ist, erfolgt im Bereich des Schaltungsträgers 14 selbst, oder im Bereich eines mit dem Schaltungsträger 14 verbundenen Anschlusskörpers 17. In dem Anschlusskörper 17 sind lediglich in den Fig. 12 und 13 dargestellte Aufnahmeöffnungen 18 ausgebildet, die beispielsweise über Metallisierungen mit dem Schaltungsträger 14 bzw. der elektronischen Schaltung des Schaltungsträgers 14 verbunden sind.

Die elektrische Verbindung zwischen den Aufnahmeöffnungen 18 und den analogen Leitungen 1 erfolgt im Bereich des Steuergeräts 10 bzw. des Steckeranschlusskörpers 12 mittels in der Fig. 2 dargestellten ersten Kontaktelementen 21, die als Stanzgitterbauteile in an sich bekannter Art und Weise gestaltet bzw. ausgebildet sind. Insbesondere weisen die ersten Kontaktelemente 21 für die analoge Leitungen 1 einen ersten Abschnitt 23 auf, der mit einer zugeordneten Aufnahmeöffnung 18 im Anschlusskörper 17 ausgerichtet und als Einpresspin ausgebildet ist. Der erste Abschnitt 23 ist beispielhaft über einen schräg zum ersten Abschnitt 23 angeordneten Zwischenabschnitt 24 mit einem senkrecht zum ersten Abschnitt 23 verlaufenden zweiten Abschnitt 25 verbunden, dessen in dem Steckeranschlusskörper 12 angeordneter Endbereich mit einem buchsenartigen Gegenelement der analogen Leitung 1 beim Ausbilden der Verbindungsanordnung 1000 zusammenwirkt.

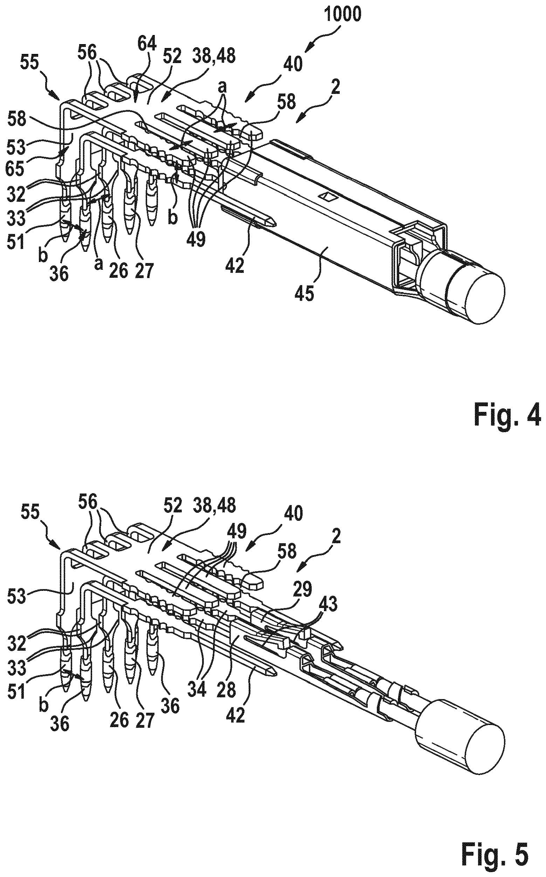

Die Ethernet-Leitung 2 weist demgegenüber steuergeräteseitig zwei erste Kontaktelemente 26, 27 auf, die der Signalübertragung dienen, und die entsprechend der Darstellung der Fig. 4 und 5 in einer gemeinsamen Ebene bzw. Reihe 6 nebeneinander angeordnet sind. Die beiden ersten Kontaktelemente 26, 27 wirken bei der Ausbildung der Verbindungsanordnung 1000 mit buchsenartigen Gegenkontakt 28, 29 der Ethernet-Leitung 2 zusammen, die im Bereich des Steckers 100 angeordnet sind.

Die beiden ersten Kontaktelemente 26, 27 weisen ebenfalls einen ersten Abschnitt 31 auf, der mit der jeweils zugeordneten Aufnahmeöffnung 18 im Anschlusskörper 17 bzw. dem Schaltungsträger 14 fluchtend ausgerichtet ist, wobei der erste Abschnitt 31 zwei Einpressschultern 32, 33 aufweist, die dazu dienen, beim Verbinden des ersten Abschnitts 31 mit der Aufnahmeöffnung 18 den ersten Abschnitt 31 durch ein nicht gezeigtes Einpresswerkzeug in die Aufnahmeöffnung 18 zum Ausbilden einer Pressverbindung einzuführen bzw. einzudrücken. Der erste Abschnitt 31 ist über einen vorzugsweise rechtwinklig zum ersten Abschnitt 31 angeordneten zweiten Abschnitt 34 mit dem jeweiligen Gegenelement 28, 29 im Stecker 100 verbindbar. Auch die ersten Kontaktelemente 26, 27 der Ethernet-Leitung 2 sind als Stanzgitterbauteile ausgebildet. Weiterhin weist die Ethernet-Leitung 2 steuergeräteseitig zwei unterschiedlich ausgestaltete zweite Kontaktelemente 36, 38 zum Ausbilden einer elektromagnetischen Abschirmung 40 für die beiden ersten Kontaktelemente 26, 27 der Ethernet-Leitung 2 auf.

Beim Herstellen des Steckeranschlusskörpers 12 werden sowohl die ersten Kontaktelemente 21, 26, und 27, als auch die zweiten Kontaktelemente 36, 38 in das Spritzgußwerkzeug für den Steckeranschlusskörper 12 eingelegt und von dem Kunststoff des Steckeranschlusskörpers 12 bereichsweise umspritzt.

Wie beispielhaft anhand der Fig. 4 und 5 erkennbar ist, sind in der Reihe, in der auch die beiden ersten Kontaktelemente 26, 27 im Steckeranschlusskörper 12 angeordnet sind, auf der dem jeweiligen ersten Kontaktelement 26, 27 zugewandten Seite jeweils ein zweites Kontaktelement 36 vorgesehen, dessen geometrische Ausbildung im Wesentlichen den ersten Kontaktelementen 26, 27 entspricht, d.h., dass die zweiten Kontaktelemente 36 ebenfalls in Aufnahmeöffnungen 18 des Anschlusskörpers 17 bzw. des Schaltungsträgers 14 einpressbar sind, sodass die entsprechenden Abschnitte der zweiten Kontaktelemente 36 als Einpresspins konzipiert sind. Auf der dem Schaltungsträger 14 abgewandten Seite weisen die zweiten Kontaktelemente 36 Endabschnitte 42 auf, die gegenüber den Endabschnitten 43 der ersten Kontaktelemente 26, 27 verlängert ausgebildet sein können, d.h. die Endabschnitte 43 der ersten Kontaktelemente 26, 27 stirnseitig überragen.

Entsprechend der Darstellung der Fig. 4 dienen die Endabschnitte 42 der zweiten Kontaktelemente 36 dazu, beim Ausbilden der Verbindungsanordnung 1000 in Anlagekontakt mit einem die buchsenartigen Gegenelemente 28, 29 umschließenden, metallischen Abschirmgehäuse 45 zu gelangen. Wesentlich dabei ist, dass die zweiten Kontaktelemente 36, 38 steuergeräteseitig, d.h. im Bereich des Schaltungsträgers 14 bzw. der Aufnahmeöffnung 18 mit elektrischem Massepotential verbunden sind.

Die zweiten Kontaktelemente 36 sind beidseitig der beiden ersten Kontaktelemente 26, 27 auf der gleichen Reihe bzw. derselben Ebene wie die ersten Kontaktelemente 26, 27 angeordnet. Demgegenüber ist das zweite Kontaktelement 38 in Form eines gebogenen Abschirmblechs 48 ausgebildet und parallel zu den ersten und zweiten Kontaktelementen 26, 27 und 36 angeordnet. Das Abschirmblech 48 weist auf der dem Abschirmgehäuse 45 zugewandten Seite beispielhaft vier stiftartige Endabschnitte 49 auf, die bei Ausbildung der Verbindungsanordnung 100 in geringem Abstand zur entsprechenden Stirnseite des Abschirmgehäuses 45 angeordnet sind bzw. enden. Der Abstand bzw. der Querschnitt der Endabschnitte 49 entspricht dabei dem Abstand bzw. dem Querschnitt der ersten und zweiten Kontaktelemente 26, 27, 36, sodass sowohl zwischen den Endabschnitten 49, als auch zwischen den ersten Kontaktelementen 26, 27 und zwischen den ersten Kontaktelementen 26, 27 und den benachbarten zweiten Kontaktelementen 36 jeweils ein Rastermaß a von beispielsweise 1,8mm ausgebildet ist, das einem standardisierten Maß entspricht. Weiterhin weist das Abschirmblech 48 auf der dem Schaltungsträger 14 bzw. dem Anschlussköper 17 zugewandten Seite zwei als Einpresspins 51 ausgebildete Endabschnitte auf, die in entsprechende, mit elektrischem Massepotential verbundene Aufnahmeöffnungen 18 einpressbar sind (Fig. 1 bis 3).

Wie anhand der Fig. 4 und 5 erkennbar ist, weisen auch die Einpresspins 51 dieselbe Geometrie bzw. Form auf wie die entsprechenden Bereiche der ersten Kontaktelemente 26, 27 und der zweiten Kontaktelemente 36, sodass auch ein senkrecht zum Rastermaß a verlaufender horizontaler Abstand b zwischen den Einpresspins 51 und den zweiten Kontaktelementen 36 einem normierten Rastermaß an dem Schaltungsträger 14 bzw. dem Anschlusskörper 17 entspricht.

Das Abschirmblech 48 weist darüber hinaus zwei Flächenabschnitte 52, 53 auf, die über den gesamten Bereich der ersten und zweiten Kontaktelemente 26, 27 und 36 reichen bzw. diese überdecken. Auch sind die beiden mittleren Endabschnitte 49 des Abschirmblechs 48 in Überdeckung mit den entsprechenden Abschnitten der ersten Kontaktelemente 26, 27 angeordnet. Im Biegebereich 55 des Abschirmblechs 48 bzw. des zweiten Kontaktelements 38 sind drei parallel zueinander angeordnete Durchgangsöffnungen 56 ausgebildet, die es ggf. ermöglichen, mittels des nicht dargestellten Einpresswerkzeugs in Wirkverbindung zu den Einpressschultern 32, 33 der unterhalb des Abschirmblechs 48 angeordneten ersten Kontaktelemente 26, 27 bzw. der zweiten Kontaktelemente 36 zu gelangen. Je nach Anwendungsfalls kann es jedoch auch vorgesehen sein, dass die Durchgangsöffnungen 57, ebenso wie die Schlitze 58 zwischen den Endabschnitte 49 verschlossen sind bzw. das Abschirmblech 48 eine vollständig geschlossene metallische Fläche ausbildet.

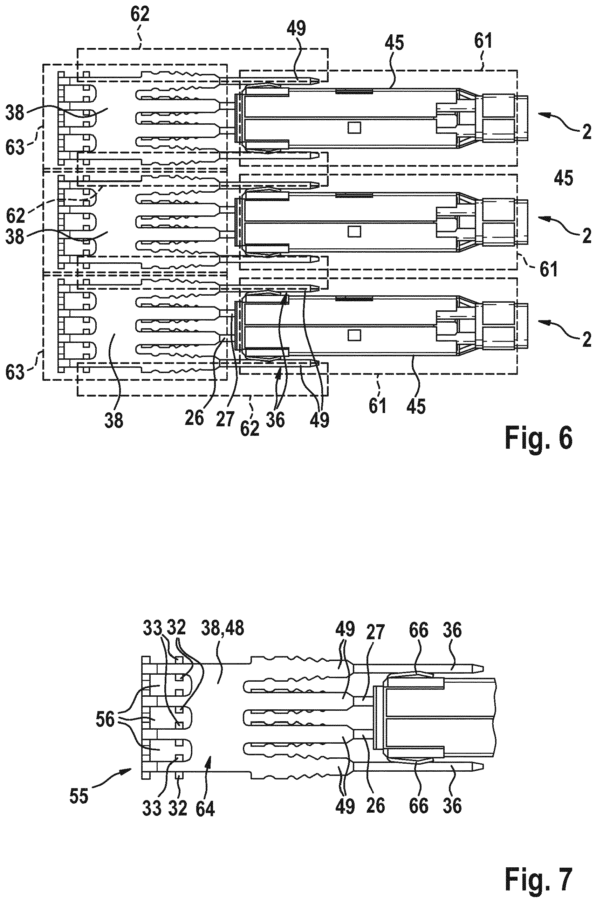

In der Fig. 6 ist anhand von beispielhaft drei unmittelbar nebeneinander angeordneten Ethernet-Leitungen 2 dargestellt, dass die Abschirmung im Verbindungsbereich der Ethernet-Leitung 2 mit den beiden zweiten Kontaktelementen 36, 38 insgesamt drei Abschirmteilbereiche 61 bis 63 aufweist. Der erste Abschirmteilbereich 61 wird steckerseitig durch das Abschirmgehäuse 45 gebildet. Der zweite Abschirmteilbereich 62 wird durch die zweiten Kontaktelemente 36 sowie insbesondere die beiden jeweils randseitig angeordneten Endabschnitte 49 des Abschirmblechs 48 gebildet. Der dritte Abschirmteilbereich 63 wird gebildet von den beiden senkrecht zueinander angeordneten Abschnitten 64, 65 des Abschirmblechs 48 bzw. des zweiten Kontaktelements 38 (Fig. 4). Weiterhin verdeutlicht die Darstellung der Fig. 6, dass die Ethernet-Leitungen 2 durch die standardisierte Anordnung bzw. die standardisierte Geometrie der ersten und zweiten Kontaktelemente 26, 27 sowie 36, 38 in Art eines Baukastensystems mit flexibler Anordnung im Bereich des Steckeranschlusskörpers 12 positioniert werden können.

In der Fig. 7 ist in Draufsicht erkennbar, dass die vier Endabschnitte 49 des Abschnitts 64 des zweiten Kontaktelements 38 bzw. Abschirmblechs 48 die entsprechenden Bereiche der beiden ersten Kontaktelemente 26, 27 sowie der zweiten Kontaktelemente 36 in der Zeichenebene der Fig. 7 zumindest im Wesentlichen vollständig überdecken. Weiterhin ist anhand der Fig. 7 erkennbar, dass die Durchgangsöffnungen 56 im Biegebereich 55 des Abschirmblechs 48 einen Zugang zu den Einpressschultern 32, 33 der ersten Kontaktelemente 26, 27 sowie der zweiten Kontaktelemente 36 ermöglichen. Zuletzt ist anhand der Fig. 7 erkennbar, dass das Abschirmgehäuse 45 beispielhaft von der Wand des Abschirmgehäuses 45 wegragende Federbereiche 66 aufweist, die in Anlagekontakt mit den Endabschnitten 42 der zweiten Kontaktelemente 36 angeordnet sind.

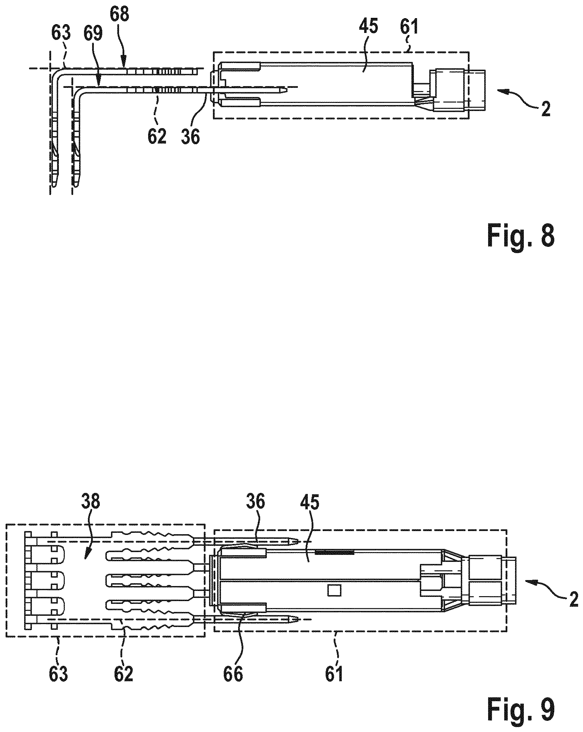

In den Fig. 8 und 9 sind nochmals die Abschirmteilbereiche 61 bis 63 entsprechend der Fig. 6 erkennbar. Insbesondere ist anhand der Fig. 8 erkennbar, dass durch die beiden zweiten Kontaktelemente 36, 38 zwei parallel zueinander angeordnete Abschirmebenen 68, 69 ausgebildet werden, die nicht nur parallel zu dem in der Fig. 8 nicht dargestellten Schaltungsträger 14 bzw. zum Anschlusskörper 17 verlaufen, sondern auch in den senkrecht zum Schaltungsträger 14 angeordneten Teilbereichen der Kontaktelemente 36, 38.

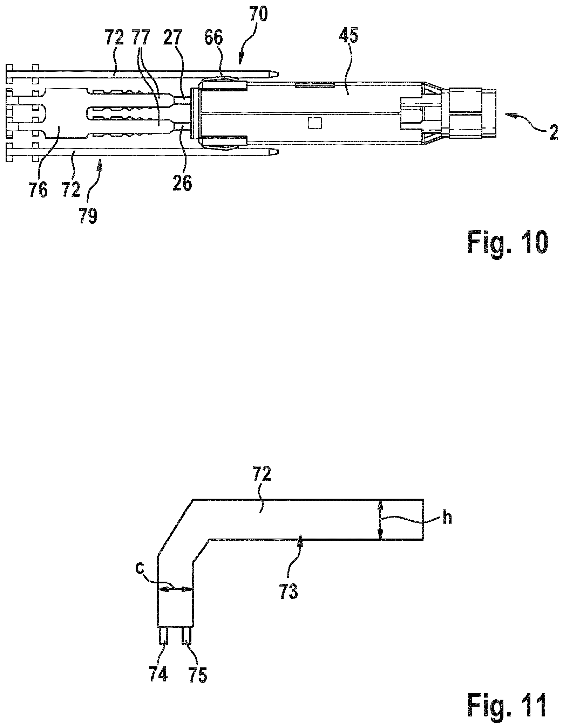

In den Fig. 10 und 11 ist eine Abschirmung 70 dargestellt, die zwei zweite Kontaktelemente 72 aufweist, die jeweils seitlich an dem Abschirmgehäuse 45 anliegen. Die beiden zweiten Kontaktelemente 72 sind in Form von Seitenblechen 73 ausgebildet, die auf der dem nicht dargestellten Schaltungsträger 14 zugewandten Seite zwei Einpresspins 74, 75 zum Verbinden mit entsprechenden Aufnahmeöffnungen 18 des Schaltungsträgers 14 bzw. des Anschlusskörpers 17 ermöglichen. Die Höhe h und Breite c der Seitenbleche 73 ist derart bemessen, dass diese in der Seitenansicht in Überdeckung mit einem weiteren, als Abschirmblech ausgebildeten zweiten Kontaktelement 76 und in Überdeckung mit den beiden ersten Kontaktelementen 26 und 27 ist. Dies ermöglicht ist, im Gegensatz zu der zuerst beschriebenen Ausführungsvariante, auf die zweiten Kontaktelemente 36 zu verzichten. Das zweite Kontaktelement 76 ist gegenüber dem zweiten Kontaktelement 38 in der Breite reduziert ausgebildet und weist daher lediglich zwei Endabschnitte 77 auf, die die entsprechenden Bereiche der ersten Kontaktelemente 26, 27 überdecken. Wesentlich ist auch, dass die Länge der Seitenbleche 73 derart ist, dass nicht das komplette Abschirmgehäuse 45 überdeckt werden muss, vielmehr genügt es, wenn die Federbereiche 66 kontaktiert werden.

In der Fig. 12 ist im Schnitt der Verbindungsbereich zwischen dem Stecker 100 und dem Steuergerät 10 im Bereich des Steckeranschlusskörpers 12 nochmals dargestellt. Hierbei ist insbesondere erkennbar, dass die Abschirmung 40 bzw. 70 den Bereich der Highspeed- bzw. Ethernet-Leitungen 2 von einem normalen, der analogen Datenübertragung dienenden Bereich 78 trennt, in dessen Bereich die analogen Leitungen 1 angeordnet sind.

In der Fig. 13 ist erkennbar, dass eine im Steckeranschlusskörper 12 angeordnete, als Trennelement 80 dienende Berührschutzrippe 81, die zumindest die ersten Kontaktelemente 26, 27 auf der dem Schaltungsträger 14 abgewandten Seite überragt, aus Metall besteht und beispielhaft mit dem Abschirmblech 48 in Anlagekontakt angeordnet ist. Durch die metallische Ausbildung des Trennelements 80 wirkt auch dieses für die unterhalb des Trennelements 80 angeordneten Bereiche der Ethernet-Leitung 2 als Abschirmelement. Da das aus Metall bestehende Trennelement 80 das Abschirmgehäuse 45 der Ethernet-Leitung 2 überdeckt, ist es möglich, das Abschirmgehäuse 45 auf der dem Trennelement 80 zugewandten Seite bereichsweise mit Öffnungen auszubilden.

Ergänzend wird erwähnt, dass es auch möglich ist, anstelle eines vollständig aus Metall bestehenden Trennelements 80 dieses beispielsweise auf der der Ethernet-Leitung 2 zugewandten Seite mit einer metallischen Beschichtung oder Ähnlichem zu versehen. Weiterhin ist es auch nicht erforderlich, das Trennelement 80 mit dem Abschirmblech 48 zu verbinden, vielmehr kann das Trennelement 80 stattdessen auch mit den zweiten Kontaktelementen 36 oder aber anderen Massepins verbunden werden.

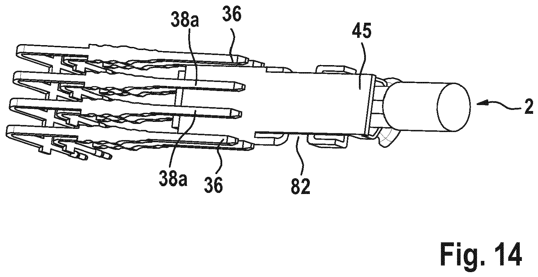

Zuletzt ist anhand der Fig. 14 erkennbar, dass das Abschirmgehäuse 45 insbesondere bei Verwendung des der Abschirmung dienenden Trennelements 80 nicht als im Querschnitt vollständig geschlossenes Abschirmgehäuse 45 ausgebildet sein muss, sondern wenigstens eine Öffnung 82 aufweisen kann. Wesentlich ist lediglich, dass die der Massekontaktierung dienenden Bereiche der zweiten Kontaktelemente 36 in Anlagekontakt mit dem Abschirmgehäuse 45 angeordnet werden können. Dabei wird erwähnt, dass die axiale Länge der zweiten Kontaktelemente 36, wie dies auch anhand der Fig. 6, 9 und 10 erkennbar ist, nicht über die gesamte Länge des Abschirmgehäuses 45 reichen muss. Vielmehr genügt es, einen Massekontakt herzustellen, d.h. dass zum Beispiel die Federbereiche 66 kontaktiert sind. Weiterhin erkennt man anhand der Fig. 14, dass die zweiten Kontaktelemente 38a im Wesentlichen identisch zu den zweiten Kontaktelemente 36 bzw. den in der Fig. 14 nicht erkennbaren ersten Kontaktelementen 26, 27 ausgebildet sind, d.h. pinartig ausgebildet sind. Sie berühren ebenfalls das Abschirmgehäuse 45, bilden jedoch kein monolithisches Abschirmblech 48 aus.

Das soweit beschriebene Steuergerät 10 kann in vielfältiger Art und Weise abgewandelt bzw. modifiziert werden, ohne vom Erfindungsgedanken abzuweichen.

## Patentansprüche

1. Steuergerät (10), mit einem Schaltungsträger (14), mit mehreren im Bereich eines Schaltungsträgers (14) oder eines Anschlusskörpers (17) und eines Steckeranschlusskörpers (12) angeordneten Reihen (3 bis 5) mit jeweils mehreren in der Reihe (3 bis 5) nebeneinander angeordneten ersten und zweiten elektrischen Kontaktelementen (21, 26, 27, 36, 38; 38a; 72, 76) zur Kontaktierung des Schaltungsträgers (14) oder des Anschlusskörpers (17) und von Gegenkontakten (28, 29) eines Steckers (100), wobei die ersten Kontaktelemente (21, 26, 27) vorzugsweise als Stanzgitterelemente mit geradlinig und gegebenenfalls in einem Winkel zueinander angeordneten ersten und zweiten Abschnitten (23, 25, 31, 34) ausgebildet sind, wobei die ersten Abschnitte (23, 31) mit dem Schaltungsträger (14) oder dem Anschlusskörper (17) verbunden sind und die zweiten Abschnitte (25, 34) mit den Gegenkontakten (28, 29) des Steckers (100) verbindbar sind,
**dadurch gekennzeichnet, dass**
die ersten Kontaktelemente (21, 26, 27) einer Signalübertragung und die zweiten Kontaktelemente (36, 38; 38a; 72, 76) der Ausbildung einer elektromagnetischen Abschirmung (40; 70) für wenigstens ein erstes Kontaktelement (26, 27) dienen, wobei die mit elektrischem Massepotential des Steuergeräts (10) verbundenen zweiten Kontaktelemente (36, 38; 38a; 72, 76) zur Ausbildung der Abschirmung (40; 70) in Überdeckung mit wenigstens einem Abschnitt (31, 34) des ersten Kontaktelements (26, 27) angeordnet sind und wobei die zweiten Kontaktelemente (36) in der gleichen Reihe wie das wenigstens eine erste Kontaktelement (26, 27) beidseitig zu dem wenigstens einen ersten Kontaktelement (26, 27) angeordnet sind, mit Ausnahme gegebenenfalls in einem Endabschnitt (42), und identisch zum wenigstens einen ersten Kontaktelement (26, 27) ausgebildet sind, wobei zwei unmittelbar nebeneinander angeordnete erste Kontaktelemente (26, 27) Bestandteil einer abgeschirmten Datenleitung, insbesondere einer Ethernet-Leitung (2) sind und ein Teil der der Abschirmung (40) der beiden ersten Kontaktelemente (26, 27) dienenden zweiten Kontaktelemente (36) dazu ausgebildet sind, ein steckerseitiges Abschirmgehäuse (45) zu kontaktieren.

2. Steuergerät nach Anspruch 1,
**dadurch gekennzeichnet,**
**dass** die der Ausbildung der Abschirmung (40; 70) des wenigstens einen ersten Kontaktelements (26, 27) dienenden zweiten Kontaktelemente (36, 38; 38a; 72, 76) unmittelbar neben dem wenigstens einen ersten Kontaktelement (26, 27) angeordnet sind.

3. Steuergerät nach Anspruch 1 oder 2,
**dadurch gekennzeichnet,**
**dass** die ersten und die zweiten Kontaktelemente (21, 26, 27, 36, 38; 38a; 72, 76) zumindest im Bereich des Steckeranschlusskörpers (12), vorzugsweise auch im Verbindungsbereich mit dem Schaltungsträger (15) beziehungsweise dem Anschlusskörper (17), in standardisierten Abständen (a, b) zueinander angeordnet sind.

4. Steuergerät nach einem der Ansprüche 1 bis 3,
**dadurch gekennzeichnet,**
**dass** die in einer anderen Reihe als das wenigstens eine erste Kontaktelement (26, 27) angeordneten zweiten Kontaktelemente (38; 76) jeweils ein Abschirmblech (48) ausbilden, dessen Breite im Überdeckungsbereich mit dem wenigstens einen ersten Kontaktelement (26, 27) zumindest bereichsweise größer ist als die Breite des wenigstens einen ersten Kontaktelements (26, 27).

5. Steuergerät nach Anspruch 4,
**dadurch gekennzeichnet,**
**dass** das Abschirmblech (48) wenigstens einen Schlitz (58) oder eine Öffnung (56) aufweist.

6. Steuergerät nach Anspruch 5,
**dadurch gekennzeichnet,**
**dass** der wenigstens eine Schlitz (58) bzw. die Öffnung (56) fluchtend zu einer Einpressschulter (32, 33) des wenigstens einen ersten Kontaktelements (26, 27) oder eines zweiten Kontaktelements (36) zum Einpressen des ersten Kontaktelements (26, 27) oder des zweiten Kontaktelements (36) in eine Aufnahmeöffnung (18) des Schaltungsträgers (14) oder des Anschlusskörpers (17) angeordnet ist.

7. Steuergerät nach Anspruch 5 oder 6,
**dadurch gekennzeichnet,**
**dass** der wenigstens eine Schlitz (58) beziehungsweise die Öffnung (56) fluchtend zu einem Freiraum zwischen zwei ersten Kontaktelementen (26, 27) oder zwischen einem ersten und einem zweiten Kontaktelement (26, 27, 36) in der Reihe des wenigstens einen ersten Kontaktelements (26, 27) angeordnet ist.

8. Steuergerät nach Anspruch 4,
**dadurch gekennzeichnet,**
**dass** die in einer anderen Reihe als das wenigstens eine erste Kontaktelement (26, 27) angeordneten zweiten Kontaktelemente (38a) zumindest im Wesentlichen wie das wenigstens eine erste Kontaktelement (26, 27) ausgebildet sind.

9. Steuergerät nach einem der Ansprüche 1 bis 8,
**dadurch gekennzeichnet,**
**dass** die zweiten Kontaktelemente (36, 38) auf der dem Schaltungsträger (14) abgewandten Seite eine unterschiedliche Länge aufweisen, derart, dass die in der gleichen Reihe wie das wenigstens eine erste Kontaktelement (26, 27) angeordneten zweiten Kontaktelemente (36) ein einer anderen Reihe zugeordnetes zweites Kontaktelement (38) überragen.

10. Steuergerät nach einem der Ansprüche 1 bis 9,
**dadurch gekennzeichnet,**
**dass** ein zweites Kontaktelement (76) in einer seitlich zum wenigstens einen ersten Kontaktelement (26, 27) verlaufenden Ebene eine geschlossene Abschirmfläche in Form eines Seitenblechs (73) ausbildet.

11. Steuergerät nach einem der Ansprüche 1 bis 10,
**dadurch gekennzeichnet,**
**dass** der Steckeranschlusskörper (12) auf der dem Schaltungsträger (14) abgewandten Seite ein zwischen zwei Reihen (3 bis 5) von ersten und/oder zweiten Kontaktelementen (21, 26, 27, 36, 38; 38a; 72, 76) angeordnetes Trennelement (80) aufweist, das mit einer Stirnfläche ein Ende des wenigstens einen ersten Kontaktelements (21, 26, 27) überragt, und dass das Trennelement (80) zumindest bereichsweise aus Metall besteht und das Metall mit Massepotential verbunden ist.

12. Elektrische Verbindungsanordnung (1000) zwischen einem Steuergerät (10), das nach einem der Ansprüche 1 bis 11 ausgebildet ist, und einem Stecker (100) mit wenigstens einem Gegenkontakt (28, 29) zum Kontaktieren eines ersten Kontaktelements (26, 27) im Steuergerät (10), **dadurch gekennzeichnet,**
**dass** der wenigstens eine Gegenkontakt (28, 29) zumindest bereichsweise von einem Abschirmgehäuse (45) umgeben ist, und dass das Abschirmgehäuse (45) in Anlagekontakt mit wenigstens einem zweiten Kontaktelement (36; 72) des Steuergeräts (10) angeordnet ist.

13. Elektrische Verbindungsanordnung nach Anspruch 12,
**dadurch gekennzeichnet,**
**dass** der Stecker (100) als Kabelbaumstecker eines Kraftfahrzeugs ausgebildet ist.

## Claims

1. Control device (10), having a circuit carrier (14), having a plurality of rows (3 to 5) which are arranged in the region of a circuit carrier (14) or a connection body (17) and a plug connection body (12) and each have a plurality of first and second electrical contact elements (21, 26, 27, 36, 38; 38a; 72, 76) which are arranged beside one another in the row (3 to 5) and are intended to make contact with the circuit carrier (14) or the connection body (17) and mating contacts (28, 29) of a plug (100), wherein the first contact elements (21, 26, 27) are preferably in the form of leadframe elements with first and second sections (23, 25, 31, 34) which are arranged in a straight line and possibly at an angle with respect to one another, wherein the first sections (23, 31) are connected to the circuit carrier (14) or to the connection body (17) and the second sections (25, 34) can be connected to the mating contacts (28, 29) of the plug (100),
**characterized in that**
the first contact elements (21, 26, 27) are used to transmit signals and the second contact elements (36, 38; 38a; 72, 76) are used to form an electromagnetic shield (40; 70) for at least one first contact element (26, 27), wherein the second contact elements (36, 38; 38a; 72, 76) which are connected to electrical earth potential of the control device (10) and are intended to form the shield (40; 70) are arranged in a manner overlapping at least one section (31, 34) of the first contact element (26, 27), and wherein the second contact elements (36) are arranged in the same row as the at least one first contact element (26, 27) on both sides of the at least one first contact element (26, 27), except possibly in an end section (42), and are identical to the at least one first contact element (26, 27), wherein two first contact elements (26, 27) arranged directly beside one another are part of a shielded data line, in particular an Ethernet line (2), and some of the second contact elements (36) which are used to shield (40) the two first contact elements (26, 27) are designed to make contact with a shielding housing (45) on the plug side.

2. Control device according to Claim 1,
**characterized**
**in that** the second contact elements (36, 38; 38a; 72, 76) which are used to form the shield (40; 70) of the at least one first contact element (26, 27) are arranged directly beside the at least one first contact element (26, 27).

3. Control device according to Claim 1 or 2,
**characterized**
**in that** the first and second contact elements (21, 26, 27, 36, 38; 38a; 72, 76) are arranged at standardized distances (a, b) from one another at least in the region of the plug connection body (12), preferably also in the region in which they are connected to the circuit carrier (15) or to the connection body (17).

4. Control device according to one of Claims 1 to 3,
**characterized**
**in that** the second contact elements (38; 76) which are arranged in a different row than the at least one first contact element (26, 27) each form a shielding plate (48), the width of which, in the region overlapping the at least one first contact element (26, 27), is greater than the width of the at least one first contact element (26, 27), at least in certain regions.

5. Control device according to Claim 4,
**characterized**
**in that** the shielding plate (48) has at least one slot (58) or an opening (56).

6. Control device according to Claim 5,
**characterized**
**in that** the at least one slot (58) or the opening (56) is arranged in a manner aligned with a press-in shoulder (32, 33) of the at least one first contact element (26, 27) or of a second contact element (36) for pressing the first contact element (26, 27) or the second contact element (36) into a receiving opening (18) of the circuit carrier (14) or of the connection body (17).

7. Control device according to Claim 5 or 6,
**characterized**
**in that** the at least one slot (58) or the opening (56) is arranged in a manner aligned with a clearance between two first contact elements (26, 27) or between a first contact element and a second contact element (26, 27, 36) in the row of the at least one first contact element (26, 27).

8. Control device according to Claim 4,
**characterized**
**in that** the second contact elements (38a) which are arranged in a different row than the at least one first contact element (26, 27) are at least substantially designed like the at least one first contact element (26, 27).

9. Control device according to one of Claims 1 to 8,
**characterized**
**in that** the second contact elements (36, 38) have a different length on the side which is remote from the circuit carrier (14) such that the second contact elements (36) arranged in the same row as the at least one first contact element (26, 27) project beyond a second contact element (38) assigned to a different row.

10. Control device according to one of Claims 1 to 9,
**characterized**
**in that** a second contact element (76) forms a closed shielding area in the form of a side plate (73) in a plane running to the side of the at least one first contact element (26, 27).

11. Control device according to one of Claims 1 to 10,
**characterized**
**in that** the plug connection body (12) has, on the side which is remote from the circuit carrier (14), a separating element (80) which is arranged between two rows (3 to 5) of first and/or second contact elements (21, 26, 27, 36, 38; 38a; 72, 76) and an end surface of which projects beyond an end of the at least one first contact element (21, 26, 27), and in that the separating element (80) consists of metal, at least in certain regions, and the metal is connected to earth potential.

12. Electrical connection arrangement (1000) between a control device (10) designed according to one of Claims 1 to 11 and a plug (100) having at least one mating contact (28, 29) for making contact with a first contact element (26, 27) in the control device (10),
**characterized**
**in that** the at least one mating contact (28, 29) is surrounded by a shielding housing (45) at least in certain regions, and in that the shielding housing (45) is arranged in bearing contact with at least one second contact element (36; 72) of the control device (10).

13. Electrical connection arrangement according to Claim 12,
**characterized**
**in that** the plug (100) is in the form of a cable harness plug of a motor vehicle.

## Revendications

1. Dispositif de commande (10), comprenant un support de circuit (14), plusieurs rangées (3 à 5) disposées au niveau d'un support de circuit (14) ou d'un corps de raccordement (17) et d'un corps de raccordement de connecteur (12) avec respectivement plusieurs premiers et deuxièmes éléments de contact électriques (21, 26, 27, 36, 38 ; 38a ; 72, 76) disposés côte à côte dans la rangée (3 à 5) pour la mise en contact du support de circuit (14) ou du corps de raccordement (17) et de contacts complémentaires (28, 29) d'un connecteur (100), dans lequel les premiers éléments de contact (21, 26, 27) sont de préférence réalisés comme des éléments de grille estampée avec des premières et deuxièmes sections (23, 25, 31, 34) disposées les unes par rapport aux autres de manière linéaire ou le cas échéant à un angle, dans lequel les premières sections (23, 31) sont reliées au support de circuit (14) ou au corps de raccordement (17), et les deuxièmes sections (25, 34) peuvent être reliées aux contacts complémentaires (28, 29) du connecteur (100),
**caractérisé en ce que** les premiers éléments de contact (21, 26, 27) servent à une transmission de signal, et les deuxièmes éléments de contact (36, 38 ; 38a ; 72, 76) servent à réaliser un blindage électromagnétique (40 ; 70) pour au moins un premier élément de contact (26, 27), dans lequel les deuxièmes éléments de contact (36, 38 ; 38a ; 72, 76) reliés au potentiel électrique de masse du dispositif de commande (10) sont disposés en recouvrement avec au moins une section (31, 34) du premier élément de contact (26, 27) pour réaliser le blindage (40 ; 70), et dans lequel les deuxièmes éléments de contact (36) sont disposés dans la même rangée que ledit au moins un premier élément de contact (26, 27) des deux côtés du au moins un premier élément de contact (26, 27), à l'exception le cas échéant dans une section d'extrémité (42), et sont réalisés de manière identique audit au moins un premier élément de contact (26, 27), dans lequel deux premiers éléments de contact (26, 27) disposés directement côte à côte font partie d'une ligne de données blindée, en particulier d'une ligne Ethernet (2), et une partie des deuxièmes éléments de contact (36) servant au blindage (40) des deux premiers éléments de contact (26, 27) est réalisée pour mettre en contact un boîtier de blindage (45) côté connecteur.

2. Dispositif de commande selon la revendication 1, **caractérisé en ce que** les deuxièmes éléments de contact (36, 38 ; 38a ; 72, 76) servant à réaliser le blindage (40 ; 70) du au moins un premier élément de contact (26, 27) sont disposés directement à côté du au moins un premier élément de contact (26, 27).

3. Dispositif de commande selon la revendication 1 ou 2, **caractérisé en ce que** les premiers et les deuxièmes éléments de contact (21, 26, 27, 36, 38 ; 38a ; 72, 76) sont disposés à des intervalles standardisés (a, b) les uns par rapport aux autres au moins au niveau du corps de raccordement de connecteur (12), de préférence aussi dans la zone de liaison avec le support de circuit (15) ou le corps de raccordement (17).

4. Dispositif de commande selon l'une quelconque des revendications 1 à 3, **caractérisé en ce que** les deuxièmes éléments de contact (38 ; 76) disposés dans une autre rangée que ledit au moins un premier élément de contact (26, 27) réalisent respectivement une tôle de blindage (48) dont la largeur dans la zone de recouvrement avec ledit au moins un premier élément de contact (26, 27) est au moins localement supérieure à la largeur du au moins un premier élément de contact (26, 27).

5. Dispositif de commande selon la revendication 4, **caractérisé en ce que** la tôle de blindage (48) présente au moins une fente (58) ou une ouverture (56).

6. Dispositif de commande selon la revendication 5, **caractérisé en ce que** ladite au moins une fente (58) ou l'ouverture (56) est disposée en alignement avec un épaulement d'insertion (32, 33) du au moins un premier élément de contact (26, 27) ou d'un deuxième élément de contact (36) pour insérer le premier élément de contact (26, 27) ou le deuxième élément de contact (36) dans une ouverture de réception (18) du support de circuit (14) ou du corps de raccordement (17).

7. Dispositif de commande selon la revendication 5 ou 6, **caractérisé en ce que** ladite au moins une fente (58) ou l'ouverture (56) est disposée en alignement avec un espace libre entre deux premiers éléments de contact (26, 27) ou entre un premier et un deuxième élément de contact (26, 27, 36) dans la rangée du au moins un premier élément de contact (26, 27).

8. Dispositif de commande selon la revendication 4, **caractérisé en ce que** les deuxièmes éléments de contact (38a) disposés dans une autre rangée que ledit au moins un premier élément de contact (26, 27) sont réalisés au moins substantiellement comme ledit au moins un premier élément de contact (26, 27).

9. Dispositif de commande selon l'une quelconque des revendications 1 à 8, **caractérisé en ce que** les deuxièmes éléments de contact (36, 38) présentent sur la face détournée du support de circuit (14) une longueur différente de sorte que les deuxièmes éléments de contact (36) disposés dans la même rangée que ledit au moins un premier élément de contact (26, 27) dépassent d'un deuxième élément de contact (38) associé à une autre rangée.

10. Dispositif de commande selon l'une quelconque des revendications 1 à 9, **caractérisé en ce qu'**un deuxième élément de contact (76) réalise dans un plan s'étendant latéralement par rapport audit au moins un premier élément de contact (26, 27) une surface de blindage fermée sous la forme d'une tôle latérale (73).

11. Dispositif de commande selon l'une quelconque des revendications 1 à 10, **caractérisé en ce que** le corps de raccordement de connecteur (12) présente sur la face détournée du support de circuit (14) un élément de séparation (80) disposé entre deux rangées (3 à 5) de premiers et/ou de deuxièmes éléments de contact (21, 26, 27, 36, 38 ; 38a ; 72, 76) et qui fait saillie avec une surface frontale au-delà d'une extrémité du au moins un premier élément de contact (21, 26, 27), et **en ce que** l'élément de séparation (80) est composé au moins localement de métal et le métal est relié au potentiel de masse.

12. Agencement de liaison électrique (1000) entre un dispositif de commande (10) qui est réalisé selon l'une quelconque des revendications 1 à 11 et un connecteur (100) pourvu d'au moins un contact complémentaire (28, 29) pour la mise en contact d'un premier élément de contact (26, 27) dans le dispositif de commande (10),
**caractérisé en ce que** ledit au moins un contact complémentaire (28, 29) est entouré au moins localement d'un boîtier de blindage (45), et **en ce que** le boîtier de blindage (45) est disposé en contact d'appui avec au moins un deuxième élément de contact (36 ; 72) du dispositif de commande (10).

13. Agencement de liaison électrique selon la revendication 12, **caractérisé en ce que** le connecteur (100) est réalisé sous la forme d'un connecteur de faisceau de câbles d'un véhicule automobile.
